# DEMANDE DE BREVET EUROPEEN

(11) **EP 4 068 053 A1**
(43) Date de publication de la demande: **05.10.2022**
(21) Numéro de dépôt: 22163179.9
(22) Date de dépôt: 21.03.2022
(51) Int. Cl.: G06F 3/01, G06F 3/03, G06F 3/0488, G06F 3/00

(54) **BOÎTIER D'INTERFACE SANS CONTACT POUR DISPOSITIF ÉLECTRIQUE OU ÉLECTRONIQUE**

(30) Priorité: 30.03.2021 FR 2103266
(71) Demandeur: Mootion, 83000 Toulon (FR)
(72) Inventeur: BOCQUET, Jonathan, 83000 TOULON (FR); MOUSSET, Thibault, 31650 SAINT ORENS DE GAMEVILLE (FR)
(74) Mandataire: Med'inVent Consulting

(57) **Abrégé**

[L'invention concerne un boîtier d'interface sans contact (100) destiné à permettre le contrôle par un utilisateur d'au moins une fonctionnalité d'un dispositif électrique ou électronique par une interaction sans contact, ledit boîtier (100) comprenant un capteur de distance (120), des moyens d'acquisition vidéo (130), ainsi qu'une unité de traitement ; ledit boîtier étant configuré pour fonctionner dans un mode nominal et dans un mode de veille dans lequel la consommation énergétique de ladite unité de traitement est réduite par rapport audit mode nominal et où lesdits moyens d'acquisition vidéo sont désactivés, ledit boîtier étant en outre configuré pour passer dudit mode de veille audit mode nominal en réponse à la détection, par ladite unité de traitement et à partir des données transmises par ledit capteur de distance, de la présence d'un utilisateur ou d'un objet dans une plage de réveil s'étendant entre ce boîtier et une distance prédéterminée de celui-ci.

## Description

### Domaine technique

La présente invention concerne d'une manière générale les interfaces permettant à un utilisateur d'interagir avec des dispositifs électriques ou électroniques. Elle vise en particulier un boîtier d'interface sans contact.

### Technique antérieure

De nombreux domaines techniques tels que la télécommunication, l'automobile, le médical, la sécurité ou encore les jeux vidéo mettent en œuvre des dispositifs électriques ou électroniques dotés d'un écran tactile permettant à un utilisateur d'interagir avec le dispositif en question.

Toutefois, de tels écrans tactiles ne constituent que des interfaces bidimensionnelles limitant le type d'interactions possibles avec le dispositif électronique à un nombre limité de gestes (appui simple, appui glissé, double appui, etc...).

Par ailleurs, l'utilisation de tels écrans tactiles comme interface utilisateur n'est pas sans poser des problèmes d'hygiène sanitaire.

Ces écrans tactiles peuvent en effet être contaminés par des microbes lors du contact avec la main d'un premier utilisateur et transmettre ensuite des bactéries et virus pathogènes à d'autres utilisateurs.

Afin de limiter ces risques de transmission de microbes entre utilisateurs, il est connu, notamment dans le domaine médical, de recouvrir l'écran tactile par un film plastique jetable remplacé après chaque utilisation du dispositif.

Il est également courant d'implanter, à proximité de l'écran tactile du dispositif, des distributeurs de gel ou de lotion antiseptique permettant aux utilisateurs de se laver les mains avant et/ou après l'utilisation de cet écran.

Ces diverses solutions s'avèrent toutefois contraignantes et ne permettent pas toujours d'éviter les contaminations. Par ailleurs, ces dernières sont particulièrement corrosives et ont tendance à attaquer le revêtement tactile de l'écran et/ou détériorer certains composants électroniques internes du dispositif lorsqu'elles parviennent à se faufiler derrière cet écran au travers des micro-interstices le bordant.

Afin de palier de manière réellement efficace aux inconvénients des interfaces tactiles, de plus en plus de dispositifs électroniques proposent désormais des interfaces utilisateur sans contact basées sur la reconnaissance gestuelle.

Dans le domaine des jeux vidéo, on connait par exemple le boîtier d'interface de console de jeu Kinect^{®} développé par la société Microsoft et permettant la détection des gestes du joueur afin que ces derniers puissent être utilisés pour contrôler le jeu.

Le boîtier d'interface Kinect comporte une caméra couleur RVB (acronyme de Rouge, Vert, Bleu ») couplée à un capteur de distance à lumière structurée constitué par un émetteur laser infrarouge associé à une caméra infrarouge. L'émetteur émet un faisceau unique qui est subdivisé en faisceaux multiples par un réseau de diffraction afin de créer un modèle constant de mouchetures projetées sur la scène L'image infrarouge du mouchetis est acquise par la caméra infrarouge, décalée par rapport à l'émetteur.

Par décorrélation locale du motif projeté et calcul de l'intensité lumineuse de chaque tâche, on obtient la distance au capteur pour toute la zone image correspondant à cette tâche.

Le document US 9 594 500 B2 divulgue un panneau de contrôle sans contact pour des toilettes intelligentes comportant un tel boîtier d'interface Kinect couplé à un écran ainsi qu'une unité de traitement.

L'écran affiche plusieurs icônes de commande activables par des gestes prédéterminés de la main ou des doigts d'un utilisateur reconnus par l'interface Kinect implantée au-dessus de cet écran.

De nombreux autres dispositifs (distributeurs de boissons, distributeurs de billets, totems interactifs) mettent également en œuvre des boîtiers d'interface sans contact de type Kinect ou autre (par exemple, Xtion PR^{®} de la société Asus Computer International, ZCam^{®} de la société 3DV Systems, ou encore RealSense^{®} de la société Intel).

L'utilisation de tels boîtiers d'interface sans contact entraine cependant une augmentation très significative de la consommation énergétique de ces dispositifs.

### Exposé de l'invention

La présente invention vise donc à limiter la consommation énergétique de ces boîtiers d'interface sans contact.

Elle propose à cet effet un boîtier d'interface sans contact destiné à permettre le contrôle par un utilisateur d'au moins une fonctionnalité d'un dispositif électrique ou électronique par une interaction sans contact, ledit boîtier d'interface sans contact comprenant un capteur de distance, des moyens d'acquisition vidéo, ainsi qu'une unité de traitement.

Selon l'invention, ledit boîtier d'interface sans contact est configuré pour fonctionner dans un mode nominal et dans un mode de veille dans lequel la consommation énergétique de ladite unité de traitement est réduite par rapport audit mode nominal et où lesdits moyens d'acquisition vidéo sont désactivés. Ce boîtier est en outre configuré pour passer dudit mode de veille audit mode nominal en réponse à la détection, par ladite unité de traitement et à partir des données transmises par ledit capteur de distance, de la présence d'un utilisateur ou d'un objet dans une plage de réveil s'étendant entre ce boîtier et une distance prédéterminée de celui-ci.

L'invention permet ainsi d'optimiser la consommation énergétique du boîtier d'interface sans contact en faisant en sorte que cette consommation énergétique soit réduite lorsqu'aucun objet ou utilisateur potentiel ne se trouve à proximité de ce boîtier.

Selon une caractéristique de réalisation préférée, ledit capteur de distance est par exemple constitué par un capteur à ultrasons comprenant un émetteur ultrasonique couplé à un récepteur ultrasonique. Un tel capteur à ultrasons présente en effet un faible coût de revient, une grande fiabilité de détection indépendante du niveau de luminosité ambiant et une faible consommation énergétique.

Selon une autre caractéristique de réalisation préférée, les moyens d'acquisition vidéo peuvent avantageusement être constitués par une caméra vidéo bidimensionnelle RVB, une telle caméra présentant un faible coût de revient et une consommation énergétique limitée.

Le boîtier d'interface sans contact peut comprendre également de manière avantageuse un afficheur apte à délivrer un retour d'information à destination dudit utilisateur.

Toujours pour des questions de coût de revient et de faible consommation énergétique, cet afficheur peut par exemple être constitué par un module comportant une matrice à diodes électroluminescentes.

De manière à permettre sa mise en œuvre dans des lieux dépourvus d'alimentation électrique, le boîtier selon l'invention peut comprendre également une batterie interne rechargeable.

Ce boîtier peut comporter en outre un module de communication sans fil permettant par exemple de mettre à jour les logiciels et/ou algorithmes embarqués dans le module de traitement.

Afin d'éviter d'avoir recours à un câble dédié pour son alimentation électrique, ce boîtier peut aussi comprendre un adaptateur PoE permettant d'assurer son alimentation électrique par un câble Ethernet.

Par ailleurs et afin de limiter au maximum les passages intempestifs du mode de veille au mode nominal, ladite distance prédéterminée est par exemple comprise entre 4 et 5 mètres.

L'invention vise également un ensemble comportant un dispositif électronique pourvu d'un écran d'affichage, et un boîtier d'interface sans contact apte à gérer l'affichage sur ledit écran. Ce dispositif électronique peut par exemple être constitué par une borne d'affichage.

L'invention vise en outre un ensemble comportant un actionneur électrique et un tel boîtier d'interface sans contact apte à gérer le fonctionnement dudit actionneur.

L'invention vise enfin un procédé de commande par un utilisateur d'au moins une fonctionnalité d'un dispositif électrique ou électronique par l'intermédiaire d'un tel boîtier d'interface sans contact, ledit procédé comportant les étapes successives suivantes :
- vérification périodique, lorsque ledit boîtier fonctionne en mode veille, de la présence d'un objet ou d'un utilisateur dans ladite plage de réveil à l'aide dudit capteur de distance ;
- passage dudit boîtier en mode de fonctionnement nominal en réponse à la détection d'un utilisateur ou d'un objet ; et
- exécution d'une commande relative à une fonctionnalité dudit dispositif en réponse à la détection d'une gestuelle de commande par ledit utilisateur et/ou de certaines caractéristiques corporelles de cet utilisateur.

Afin d'éviter une surconsommation en mode nominal due à un objet dans le champ de détection, le procédé peut comporter, avant l'étape d'exécution d'une commande, les étapes suivantes :
- vérification, après le passage en mode nominal dudit boîtier et à l'aide desdits moyens d'acquisition vidéo, s'il s'agit d'un utilisateur ou d'un objet, et
- s'il s'agit d'un utilisateur, détermination de la présence de ce dernier dans une sous-plage d'interaction s'étendant sur une portion prédéfinie de ladite plage de réveil avant de détecter une gestuelle de commande ou certaines caractéristiques corporelles.

Selon une caractéristique préférée dudit procédé, celui-ci comprend, après ladite étape de vérification de la présence dudit utilisateur dans ladite sous-plage d'interaction, une étape d'émission d'une alerte invitant ledit utilisateur à se positionner correctement si celui-ci se trouve en dehors de cette sous-plage d'interaction tout en demeurant dans ladite plage de réveil.

Cette alerte peut par exemple comprendre l'affichage d'un pictogramme sur l'afficheur dudit boîtier.

### Brève description des dessins

L'exposé de l'invention sera maintenant poursuivi par la description détaillée d'un exemple de réalisation, donnée ci-après à titre illustratif mais non limitatif, en référence aux dessins annexés, sur lesquels :
[Fig 1] représente une vue en perspective d'un totem interactif comportant un boîtier d'interface sans contact selon l'invention et une borne électronique d'affichage ;
[Fig 2] est un diagramme fonctionnel du totem électronique de la figure 1 ;
[Fig 3] représente une vue en perspective du boîtier d'interface sans contact selon l'invention ;
[Fig 4] est une vue en perspective de l'intérieur du boîtier électronique de la figure 2 ;
[Fig 5] représente un organigramme du procédé de fonctionnement du totem interactif de la figure 1 ;
[Fig 6], [Fig 7], [Fig 8], [Fig 9], [Fig 10] et [Fig 11] illustrent différentes étapes du procédé de la figure 5 ;
[Fig 12] représente une vue en perspective d'un dispositif de contrôle d'accès comportant un boîtier d'interface sans contact selon l'invention associé à un actionneur ; et
[Fig 13] est l'organigramme du procédé de fonctionnement du dispositif de contrôle d'accès de la figure 12.

### Description détaillée

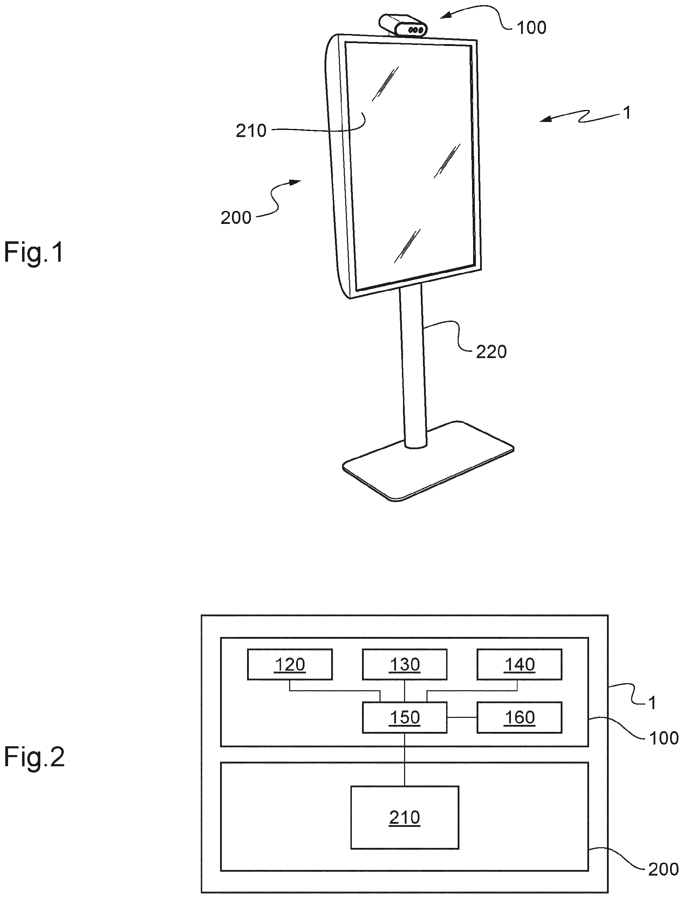

La figure 1 représente un totem interactif 1 destiné à être installé dans des lieux publics tels que par exemple un hôtel, une gare, un hôpital, un hall d'exposition, un magasin, un office du tourisme, une mairie, et ayant pour objet de faciliter l'échange d'informations utiles avec le public circulant dans ces lieux de grande fréquentation.

Le totem interactif 1, dont le diagramme fonctionnel est représenté sur la figure 2, comporte un boîtier électronique d'interface sans contact 100 selon l'invention implanté sur le dessus d'une borne électronique d'affichage 200 comprenant un écran de grande dimension 210 (par exemple de 40 à 50 pouces) orienté par exemple de manière verticale et monté en hauteur (de sorte à se trouver en regard des utilisateurs) sur un châssis support 220 reposant sur le sol.

En variante, ce totem interactif peut également être directement fixé contre un mur.

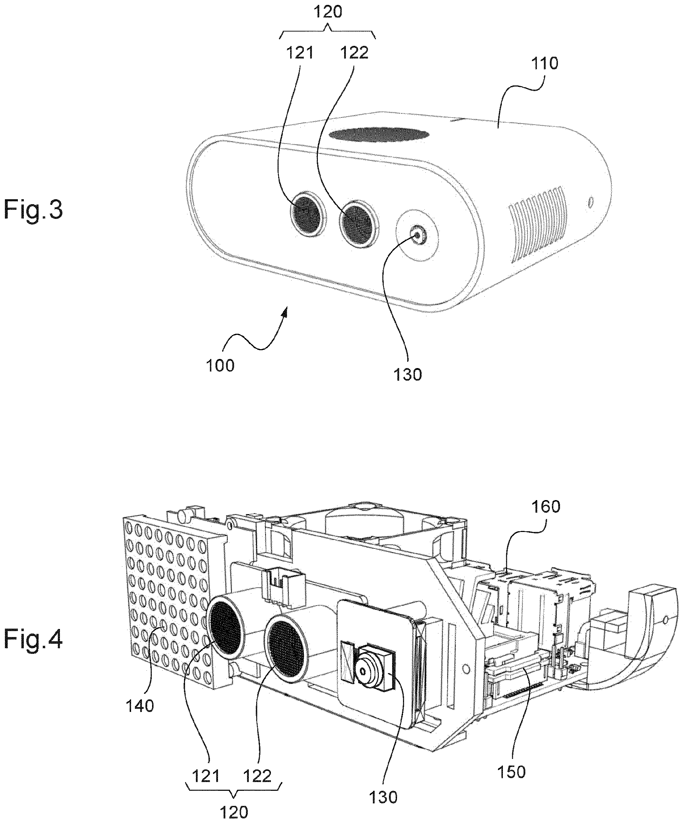

Représenté seul sur les figures 3 et 4, le boîtier d'interface sans contact 100 est apte à interagir avec un utilisateur pour gérer l'affichage de l'écran 210 de la borne d'affichage 200.

Ce boîtier d'interface sans contact 100 comporte un corps creux en matière plastique 110 hébergeant un capteur de distance 120, des moyens d'acquisition vidéo 130, un afficheur 140, une unité de traitement 150 et un module de communication sans fil 160.

Le capteur de distance 120 est avantageusement constitué par un capteur à ultrasons comprenant un émetteur ultrasonique 121 couplé à un récepteur ultrasonique 122. L'émetteur 121 est apte à envoyer une onde ultrasonore qui est réfléchie par une surface d'un utilisateur ou d'un objet et détectée par le récepteur 122. La mesure du délai séparant l'émission de cette onde de la réception de son écho permet de déterminer la distance entre le capteur et cette surface.

Un tel capteur de distance à ultrasons présente pour principaux avantages d'avoir une faible consommation énergétique (de l'ordre de 0.1 W) tout en offrant une bonne qualité de mesure indépendante du niveau de luminosité des différents objets et/ou personnes présentes dans son cône de détection.

En variante, le capteur de distance utilisé peut être de type à infrarouges et comporter un émetteur infrarouge couplé à un récepteur infrarouge. Ce type de capteur présente toutefois pour inconvénient de fournir une qualité de mesure dépendant de la luminosité ambiante.

D'autres types de capteurs de distance peuvent également être envisagés, par exemple de type lidar ou à caméra stéréoscopique mais ces derniers ne seront pas privilégiés pour des raisons évidentes de coût et/ou de consommation énergétique.

Les moyens d'acquisition vidéo sont avantageusement constitués par une caméra vidéo bidimensionnelle RVB 130 de type CCD (acronyme en langue anglaise de « Charge-Coupled Device ») ou CMOS (acronyme en langue anglaise de « Complementary Metal-Oxide Semiconductor »), et étant apte à délivrer au moins un flux vidéo de sortie.

On utilisera par exemple une caméra dotée d'un capteur CMOS doté d'une architecture à faible bruit de type BSI (acronyme en langue anglaise de «Back Side Illumination »), et apte à délivrer des flux vidéo de sorti sous différentes résolutions et fréquences de rafraichissement. Une telle caméra présente notamment pour avantage d'avoir un faible coût de revient associé une consommation énergétique limitée, de l'ordre de 1 à 2W.

En variante, les moyens d'acquisition vidéo peuvent être différents et constitués par exemple par une caméra RVB stéréoscopique.

L'afficheur 140 est avantageusement constitué par un module comportant une matrice à diodes électroluminescentes (désignée couramment sous la dénomination « matrice à leds ») associé à un microcontrôleur permettant de contrôler chaque diode indépendamment. Ce type d'afficheur présente pour avantages d'avoir un faible coût de revient associé une consommation énergétique limitée, de l'ordre de 0.25 à 0.5W par diode allumée, ainsi que d'être particulièrement lumineux de sorte que son affichage soit visible au travers de la façade avant du corps creux 110.

On utilisera par exemple un module comprenant une matrice carrée à 8 lignes et 8 colonnes de diodes électroluminescentes RVB dont la couleur est réglable sur un nombre prédéterminé de niveaux.

En variante, l'afficheur 140 pourra être constitué par un écran à cristaux-liquides et à matrice de transistors en film mince, désignée communément sous l'acronyme anglais TFT LCD (pour « Thin-Film-Transistor Liquid-Crystal Display ») ou par un écran à matrice active à diodes électroluminescentes organiques, désignée communément sous l'acronyme anglais AMOLED (pour « Active-Matrix Organic Light-Emitting Diode ») ou bien encore par un écran à encre électronique.

Reliée au capteur de distance 120, à la caméra 130, à l'afficheur 140, ainsi qu'en l'espèce à l'écran 210 de la borne 200 (par exemple via un câble de liaison de type HDMI), l'unité de traitement 150 comporte un calculateur doté d'un processeur central (ou CPU pour « Central Processing Unit ») et d'un processeur graphique (ou GPU pour « Graphical Processing Unit ») comprenant chacun plusieurs cœurs de traitement interconnectés, ainsi qu'un module mémoire comprenant de la mémoire volatile et de la mémoire non volatile de type EEPROM (acronyme en langue anglaise de « Electrically Erasable Programmable Read Only Memory »).

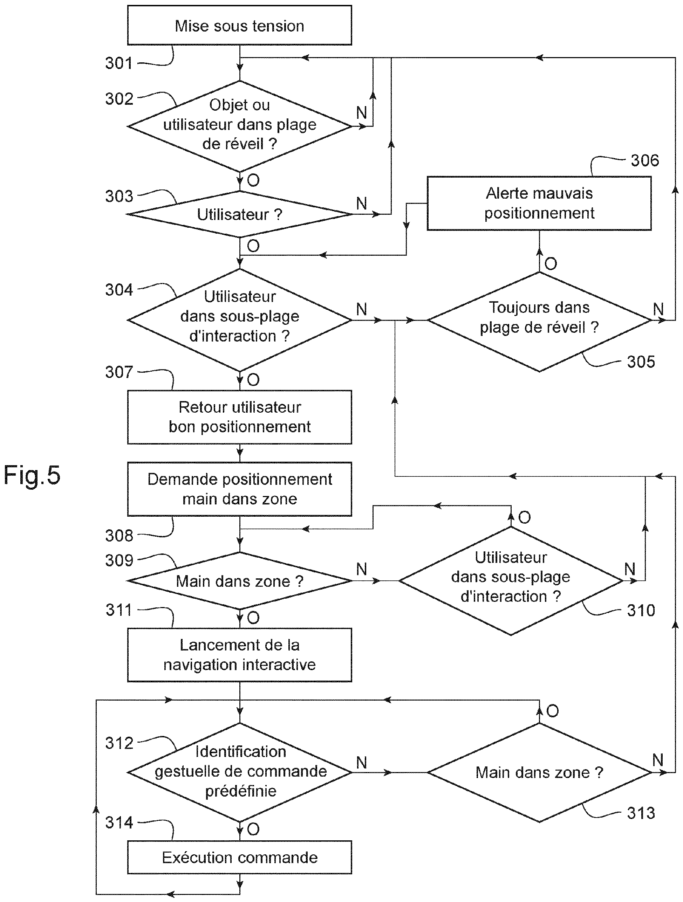

La mémoire non volatile est destinée à stocker différents types de données telles que le contenu des différentes pages affichables sur l'écran de la borne, les paramètres de configuration du dispositif (par exemple, la résolution du flux vidéo entrant délivré par la caméra et celle du flux vidéo sortant du boîtier, l'orientation horizontale ou verticale des pages affichables, etc...), différents algorithmes de suivi des mouvement de certaines parties du corps de l'utilisateur, de reconnaissance de certaines gestuelles et/ou de caractéristiques corporelles de cet utilisateur), ainsi que le processus de fonctionnement du totem interactif 1 dont l'organigramme est représenté sur la figure 5).

L'ensemble des informations contenues dans cette mémoire non volatile peut être mis à jour par des moyens de communication ou des moyens de lecture d'un support de données.

En l'espèce et de manière préférentielle, cette mise à jour s'effectuera par l'intermédiaire du module de télécommunication sans fil 160 (par exemple de type Wifi ou Bluetooth) intégré au boîtier et relié à l'unité de traitement 150.

Le boîtier d'interface sans contact 100 est configuré pour fonctionner dans un mode nominal et dans un mode de veille dans lequel la consommation énergétique de l'unité de traitement 150 est réduite par rapport au mode nominal et où les moyens d'acquisition vidéo sont désactivés.

La réduction de la consommation énergétique de l'unité de traitement 150 peut être obtenue par exemple par une désactivation ou un fonctionnement à une fréquence inférieure de certains cœurs du CPU et/ou du GPU.

Afin de réduire encore la consommation énergétique dans ce mode de veille, l'afficheur 140 et/ou le module de télécommunication sans fil 160 peuvent aussi être désactivés.

Concernant l'unité de traitement 150, on peut également prévoir que seul un circuit de traitement des données transmises par le capteur de distance soit activé dans le mode de veille (les horloges du CPU et du GPU étant coupées), ce circuit étant par ailleurs apte à commander le passage du boîtier 100 vers le mode nominal.

Le boîtier d'interface sans contact 100 est en outre configuré pour passer de ce mode de veille au mode nominal en réponse à la détection, par l'unité de traitement 150 et à partir des données transmises par le capteur de distance 120, de la présence d'un utilisateur ou d'un objet dans une plage de réveil s'étendant entre ce boîtier 100 et une distance prédéterminée de celui-ci, par exemple comprise entre 4 et 5 mètres.

Selon des variantes de réalisation non représentées du boîtier d'interface sans contact 100, celui peut être dépourvu d'afficheur tel que 140 ou de module de communication tel que 160.

Selon d'autres variantes de réalisation non représentées, ce boîtier d'interface sans contact 100 peut comporter une batterie interne rechargeable, tel que par exemple une batterie Li-ion présentant une capacité avantageusement d'au moins 20 000 mAh de sorte à assurer une autonomie satisfaisante en l'absence d'une source d'alimentation externe.

Le boîtier 100 pourrait également être pourvu de panneaux photovoltaïques permettant d'assurer la recharge de cette batterie lorsque ce boîtier est installé à l'extérieur.

Selon encore d'autres variantes de réalisation non représentées, le boîtier d'interface sans contact 100 peut comporter un adaptateur PoE (acronyme en langue anglaise de « Power on Ethernet) permettant d'assurer son alimentation électrique par un câble Ethernet (avec une puissance maximale de 15, 4 W).

On va maintenant décrire en détails et à l'appui de l'organigramme de cette figure 5, le processus de fonctionnement du totem interactif 1.

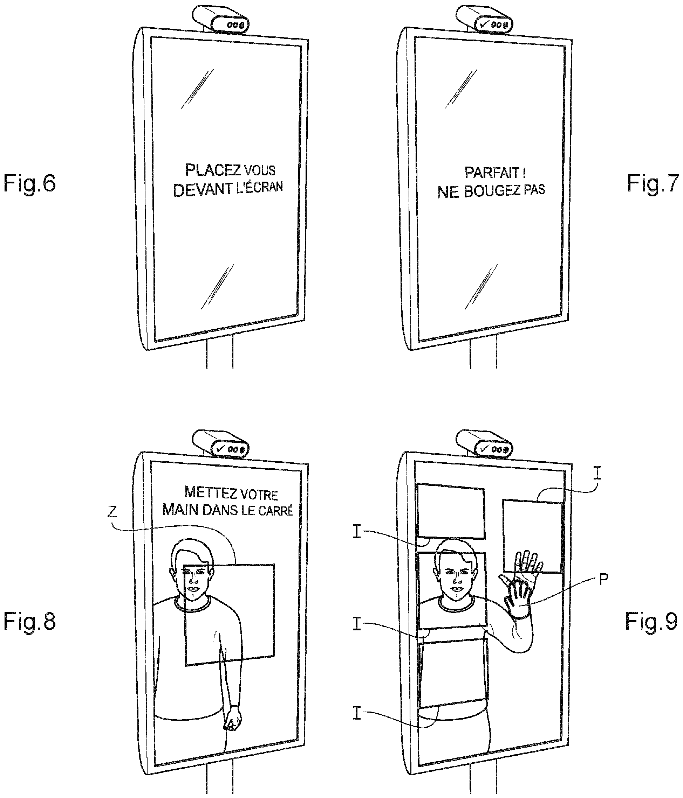

Ce processus est initié à l'étape 301, par la mise sous tension de l'alimentation de la borne d'affichage 200 et de celle du boîtier d'interface sans contact 100, de sorte à provoquer le démarrage de ce boîtier 100 en mode de veille et l'affichage sur l'écran 210 de la borne 200 d'une page d'attente affichant certaines informations et/ou invitant un utilisateur à se placer en face de lui pour interagir avec cette borne (voir figure 6).

Le totem interactif 1 est dès lors opérationnel et l'unité de traitement 150 du boîtier 100 vérifie, à partir des données transmises par le capteur de distance 120, la présence d'un utilisateur ou d'un objet dans la plage de réveil (étape 302).

Dans la négative, l'unité de traitement 150 réitère cette étape de vérification 302 suivant une fréquence prédéfinie (par exemple, toutes les secondes).

Lorsqu'un utilisateur ou un objet été détecté, le boîtier 100 passe automatiquement en mode de fonctionnement nominal et l'unité de traitement 150 vérifie, via un algorithme de reconnaissance et à partir des données transmises par la caméra 130, s'il s'agit d'un utilisateur ou d'un objet (étape 303).

Si l'unité de traitement 150 détermine qu'il s'agit d'un objet, le processus retourne automatiquement à l'étape 302, éventuellement après un délai d'attente prédéterminé compris par exemple entre 5 et 10 secondes.

S'il s'agit bien d'un utilisateur, l'unité de traitement 150 vérifie, à partir des données transmises par le capteur de distance 120, la présence de cet utilisateur dans une sous-plage d'interaction s'étendant sur une portion prédéfinie de la plage de réveil (par exemple, entre 1 et 3 mètres du boîtier 100) (étape 304).

Dans la négative, l'unité de traitement 150 vérifie si l'utilisateur est toujours détecté dans la plage de réveil (étape 305). Si tel est le cas, l'unité de traitement 150 commande l'affichage sur l'afficheur 140 du boîtier 100 et/ou sur l'écran 210 de la borne 200 d'une alerte l'invitant à se positionner correctement (par exemple, sur l'afficheur 140 un pictogramme tel qu'une une flèche de couleur orange orientée dans un sens ou dans l'autre suivant que l'utilisateur est trop loin ou trop prés, et sur l'écran 210 un message textuel invitant l'utilisateur à se rapprocher ou à s'éloigner de la borne 200) (étape 306) et retourne ensuite à l'étape 304. Si l'utilisateur est sorti de la plage de réveil, le processus retourne directement à l'étape 302.

Lorsque l'unité de traitement 150 détecte durant l'étape 304 que l'utilisateur est bien positionné dans la sous-plage d'interaction, celle-ci commande au cours de l'étape 307 l'affichage sur l'afficheur 140 du boîtier 100 et/ou sur l'écran 210 de la borne 200 d'un retour d'information lui signalant qu'il es ;t positionné correctement (par exemple, sur l'afficheur 140 un pictogramme tel qu'une coche ou un smiley de couleur verte, et/ou sur l'écran 210 un message textuel indiquant qu'il est bien positionné tel qu'illustré par la figure 7).

Le processus se poursuit alors par l'étape 308 au cours de laquelle l'unité de traitement 150 commande l'affichage sur l'écran 210 de la borne 200 du flux vidéo inversé de celui capturé par la caméra 130 de sorte à ce que l'utilisateur se voit dans cet écran 210 comme dans un miroir. Un message textuel est également affiché en superposition sur ce flux vidéo inversé, ce message demandant à l'utilisateur de positionner l'une de ses mains dans une zone prédéfinie Z de l'écran 210 dont le contour est matérialisé sur ce dernier (voir figure 8).

L'unité de traitement 150 vérifie ensuite, via un algorithme de reconnaissance des mains et à partir des données transmises par la caméra 130, si l'utilisateur a bien positionné l'une de ses mains dans la zone préfinie de l'écran 210 (étape 309).

Dans la négative, le processus vérifie si l'utilisateur est toujours détecté dans la sous-plage d'interaction (étape 310).

Si tel est le cas, le processus revient à l'étape 309 de recherche d'une main dans la zone préfinie de l'écran 210. Dans le cas contraire, le processus retourne directement à l'étape 305.

Dès qu'une main a été détectée dans cette zone prédéfinie de l'écran 210, l'unité de traitement 150 lance la navigation interactive en affichant sur cet écran 210 une page comprenant un certain nombre d'éléments avec lesquels l'utilisateur peut interagir (voir figure 9). Un pointeur mobile P (par exemple en forme de main ou de flèche) est également affiché en superposition sur cette page, ce pointeur suivant les mouvements de la main de l'utilisateur via un algorithme de suivi de la main exploitant les données transmises par la caméra 130 (étape 311).

Tel qu'illustré sur cette figure 9, ces éléments interactifs peuvent comporter des d'icônes I sélectionnables pour entrainer l'affichage sur l'écran 210 d'une page de contenu informatif (par exemple, sur un lieu touristique) ou bien la commande d'une fonctionnalité prédéfinie. Ces derniers peuvent également comporter par exemple des curseurs linéaires, ou bien encore des menus déroulants.

L'unité de traitement va des lors vérifier si les mouvements de la main effectués par l'utilisateur correspondent à une gestuelle de commande prédéfinie (étape 312).

Le terme « gestuelle de commande » doit être entendu comme tout mouvement délibéré de la main entière ou d'une partie de celle-ci définissant un code détectable par l'unité de traitement 150 pour générer une commande. Ceci peut notamment inclure le positionnement de cette main ou d'une partie de celle-ci en regard d'une zone particulière de l'écran 210, la modification de son orientation, de sa forme ou du positionnement des doigts les uns par rapport aux autres, etc... Ces gestuelles de commandes peuvent également faire référence à des gestes utilisés dans la langue des signes.

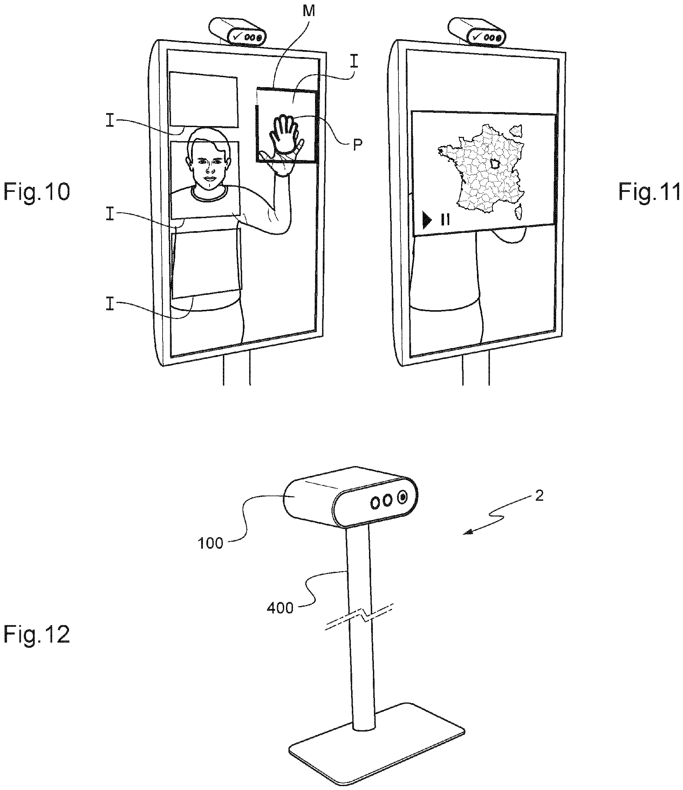

En l'espèce, la gestuelle de commande pour sélectionner l'une des icônes I présentes sur la page consiste à déplacer le pointeur virtuel P sur l'écran 210 sur cette icône I et de l'y maintenir pendant une durée prédéterminée (par exemple, une seconde). Afin que la réalisation de cette gestuelle de commande soit plus intuitive pour l'utilisateur, un minuteur visuel M encadrant cette icône I (ou le pointeur P) apparait avantageusement dès que le pointeur P se superpose sur cette dernière (voir figure 10).

Si aucune gestuelle de commande prédéfinie n'est identifiée, l'unité de traitement vérifie si elle détecte toujours la main de l'utilisateur (étape 313). Dans l'affirmative, le processus revient à l'étape 312 de recherche d'une gestuelle de commande prédéfinie. Sinon, le processus retourne directement à l'étape 305.

Lorsqu'une telle gestuelle de commande prédéfinie est identifiée, l'unité de traitement exécute la commande correspondante (étape 314). La sélection d'une icône I peut ainsi par exemple entrainer l'affichage d'une page spécifique sur l'écran 210 (voir figure 11).

Le processus retourne ensuite à l'étape 312 vérifier si les nouveaux mouvements de la main effectués par l'utilisateur correspondent à une gestuelle de commande prédéfinie.

La figure 12 représente un dispositif de contrôle d'accès 2 destiné à être installé à l'entrée d'un lieu sensible tel que par exemple une salle blanche, une zone industrielle à risque, un site accueillant du public, etc...

Le dispositif de contrôle d'accès 2 comporte un boîtier électronique d'interface sans contact 100 selon l'invention implanté au sommet d'un mât support 400 reposant sur le sol, ainsi qu'au moins un actionneur non représenté apte à commander l'ouverture et la fermeture d'un sas d'accès.

En variante, le boîtier 100 peut également être directement fixé contre un support quelconque tel que par exemple un mur.

Le boîtier d'interface sans contact 100 est apte à interagir avec un utilisateur pour gérer le fonctionnement de l'actionneur.

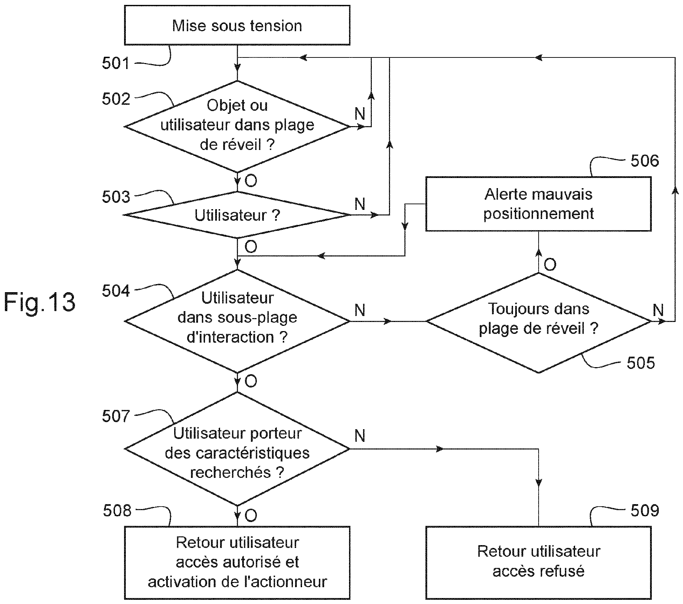

On va maintenant décrire en détails et à l'appui de l'organigramme de la figure 13, le processus de fonctionnement de ce dispositif 2.

Ce processus est initié à l'étape 501, par la mise sous tension de l'alimentation du boîtier d'interface sans contact 100 et de l'actionneur, de sorte à provoquer le démarrage de ce boîtier 100 en mode de veille et l'affichage éventuel sur son afficheur 140 d'un message invitant un utilisateur à se placer en face de lui pour interagir avec ce dispositif 2.

Le dispositif de contrôle d'accès 2 est dès lors opérationnel et l'unité de traitement 150 du boîtier 100 vérifie, à partir des données transmises par le capteur de distance 120, la présence d'un utilisateur ou d'un objet dans la plage de réveil (étape 502).

Dans la négative, l'unité de traitement 150 réitère cette étape de vérification 502 suivant une fréquence prédéfinie (par exemple, toutes les secondes).

Lorsqu'un utilisateur ou un objet été détecté, le boîtier 100 passe automatiquement en mode de fonctionnement nominal et l'unité de traitement 150 vérifie, via un algorithme de reconnaissance et à partir des données transmises par la caméra 130, s'il s'agit d'un utilisateur ou d'un objet (étape 503).

Si l'unité de traitement 150 détermine qu'il s'agit d'un objet, le processus retourne automatiquement à l'étape 502, éventuellement après un délai d'attente prédéterminé compris par exemple entre 5 et 10 secondes.

S'il s'agit bien d'un utilisateur, l'unité de traitement 150 vérifie, à partir des données transmises par le capteur de distance 120, la présence de cet utilisateur dans une sous-plage d'interaction s'étendant sur une portion prédéfinie de la plage de réveil (par exemple, entre 1 et 3 mètres du boîtier 100) (étape 504).

Dans la négative, l'unité de traitement 150 vérifie si l'utilisateur est toujours détecté dans la plage de réveil (étape 505). Si tel est le cas, l'unité de traitement 150 commande l'affichage sur l'afficheur 140 du boîtier 100 d'une alerte l'invitant à se positionner correctement (par exemple, sur l'afficheur 140 un pictogramme tel qu'une flèche de couleur orange orientée dans un sens ou dans l'autre suivant que l'utilisateur est trop loin ou trop prés) (étape 506) et retourne ensuite à l'étape 504. Si l'utilisateur est sorti de la plage de réveil, le processus retourne directement à l'étape 502.

Lorsque l'unité de traitement 150 détecte durant l'étape 504 que l'utilisateur est bien positionné dans la sous-plage d'interaction, celle-ci va vérifier, via un algorithme de reconnaissance de certaines caractéristiques corporelles de l'utilisateur et à partir des données de la caméra 130, si l'utilisateur est porteur des caractéristiques recherchées (étape 507).

Ces caractéristiques corporelles sont variables en fonction du domaine d'utilisation du dispositif. Ainsi, pour l'accès à une salle blanche ou à une zone industrielle à risque, les caractéristiques recherchées seront par exemple le port de certains équipements de protection tels que, blouse, gants, masque, filet pour cheveux, cagoule, couvre-chaussures, casque, etc...

Si les caractéristiques recherchées ont été détectées sur l'utilisateur, l'unité de traitement 150 commande au cours de l'étape 508 l'affichage sur l'afficheur 140 du boîtier 100 d'un retour d'information lui signalant que l'accès est autorisé (par exemple, un pictogramme tel qu'une coche ou un smiley de couleur verte) et l'activation de l'actionneur de sorte à ouvrir le sas d'accès.

Dans le cas contraire, l'unité de traitement 150 commande l'affichage sur l'afficheur 140 du boîtier 100 d'un retour d'information lui signalant que l'accès est proscrit (par exemple, une croix de couleur rouge) et éventuellement l'activation d'une alarme sonore externe (étape 509).

D'une manière générale, on rappellera que la présente invention ne se limite pas aux formes de réalisation décrites et représentées, mais qu'elle englobe toute autre variante d'exécution à la portée de l'homme du métier. ]

## Revendications

1. Boîtier d'interface sans contact (100) destiné à permettre le contrôle par un utilisateur d'au moins une fonctionnalité d'un dispositif électrique ou électronique (1 ; 2) par une interaction sans contact, ledit boîtier d'interface sans contact (100) comprenant un capteur de distance (120), des moyens d'acquisition vidéo (130), ainsi qu'une unité de traitement (150) ; **caractérisé en ce que** ledit boîtier d'interface sans contact (100) est configuré pour fonctionner dans un mode nominal et dans un mode de veille dans lequel la consommation énergétique de ladite unité de traitement (150) est réduite par rapport audit mode nominal et où lesdits moyens d'acquisition vidéo (130) sont désactivés ;
ledit boîtier d'interface sans contact (100) étant en outre configuré pour passer dudit mode de veille audit mode nominal en réponse à la détection, par ladite unité de traitement (150) et à partir des données transmises par ledit capteur de distance (120), de la présence d'un utilisateur ou d'un objet dans une plage de réveil s'étendant entre ce boîtier et une distance prédéterminée de celui-ci.

2. Boîtier d'interface sans contact selon la revendication 1, **caractérisé en ce que** ledit capteur de distance est constitué par un capteur à ultrasons (120) comprenant un émetteur ultrasonique (121) couplé à un récepteur ultrasonique (122).

3. Boîtier d'interface sans contact selon l'une des revendications 1 ou 2, **caractérisé en ce que** lesdits moyens d'acquisition vidéo sont constitués par une caméra vidéo bidimensionnelle RVB (130).

4. Boîtier d'interface sans contact selon l'une des revendications 1 à 3, **caractérisé en ce qu'**il comporte un afficheur (140) apte à délivrer un retour d'information à destination dudit utilisateur.

5. Boîtier d'interface sans contact selon la revendication 4, **caractérisé en ce que** ledit afficheur est constitué par un module (140) comportant une matrice à diodes électroluminescentes.

6. Boîtier d'interface sans contact selon l'une des revendications 1 à 5, **caractérisé en ce qu'**il comporte également une batterie interne rechargeable.

7. Boîtier d'interface sans contact selon l'une des revendications 1 à 6, **caractérisé en ce qu'**il comporte en outre un module de communication sans fil (160).

8. Boîtier d'interface sans contact selon l'une des revendications 1 à 7, **caractérisé en ce qu'**il comporte un adaptateur PoE permettant d'assurer son alimentation électrique par un câble Ethernet.

9. Ensemble (1) comportant un dispositif électronique (200) pourvu d'un écran d'affichage (210), et un boîtier d'interface sans contact (100) selon l'une des revendications 1 à 8 apte à gérer l'affichage sur ledit écran (210).

10. Ensemble (1) selon la revendication 9, **caractérisé en ce que** ledit dispositif électronique est constitué par une borne d'affichage (200).

11. Ensemble (2) comportant un actionneur électrique et un boîtier d'interface sans contact (100) selon l'une des revendications 1 à 8 apte à gérer le fonctionnement dudit actionneur.

12. Procédé de commande par un utilisateur d'au moins une fonctionnalité d'un dispositif électrique ou électronique (1 ; 2) par l'intermédiaire d'un boîtier d'interface sans contact (100) selon l'une des revendications 1 à 8, ledit procédé comportant les étapes successives suivantes :
- vérification périodique, lorsque ledit boîtier (100) fonctionne en mode veille, de la présence d'un objet ou d'un utilisateur dans ladite plage de réveil (302 ; 502) à l'aide dudit capteur de distance (120);
- passage dudit boîtier (100) en mode de fonctionnement nominal en réponse à la détection d'un utilisateur ou d'un objet ; et
- exécution d'une commande relative à une fonctionnalité dudit dispositif (1 ; 2) en réponse à la détection d'une gestuelle de commande effectuée par ledit utilisateur et/ou de certaines caractéristiques corporelles de cet utilisateur (314 ; 508).

13. Procédé de commande selon la revendication 12, **caractérisé en ce qu'**il comprend, avant l'étape d'exécution d'une commande (314 ; 508), les étapes suivantes :
- vérification, après le passage en mode nominal dudit boîtier (100) et à l'aide desdits moyens d'acquisition vidéo (130), s'il s'agit d'un utilisateur ou d'un objet (303 ; 503) ; et
- s'il s'agit d'un utilisateur, détermination de la présence de ce dernier dans une sous-plage d'interaction s'étendant sur une portion prédéfinie de ladite plage de réveil (304 ; 504) avant de détecter une gestuelle de commande ou certaines caractéristiques corporelles.

14. Procédé de commande selon la revendication 13, **caractérisé en ce qu'**il comprend, après ladite étape de vérification de la présence dudit utilisateur dans ladite sous-plage d'interaction (304 ; 504), une étape d'émission d'une alerte invitant ledit utilisateur à se positionner correctement si celui-ci se trouve en dehors de cette sous-plage d'interaction tout en demeurant dans ladite plage de réveil (306 ; 506).

15. Procédé de commande selon la revendication 14, **caractérisé en ce que** ladite alerte comprend l'affichage d'un pictogramme sur l'afficheur dudit boîtier.
